(19) **Europäisches Patentamt / European Patent Office / Office européen des brevets**

(11) **EP 3 871 872 A1**

(12) **EUROPEAN PATENT APPLICATION**

(43) Date of publication:
01.09.2021 Bulletin 2021/35

(21) Application number: 21159629.1

(22) Date of filing: 26.02.2021

(51) Int Cl.:
*B32B 1/02* (2006.01)   *B32B 5/02* (2006.01)
*B32B 5/18* (2006.01)   *B32B 7/12* (2006.01)
*B32B 27/06* (2006.01)   *B32B 27/12* (2006.01)
*B32B 27/40* (2006.01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 27.02.2020 GB 202002806

(71) Applicant: Autins Limited
Nuneaton, Warwickshire CV13 6DE (GB)

(72) Inventors:
• OXENHAM, Joe
  Birmingham B1 2JX (GB)
• JANZEN, Stefan
  Rugby, Warwickshire CV23 0WE (GB)
• BERESFORD, Kathy
  Rugby, Warwickshire CV23 0WE (GB)
• WILD, Keith
  Niagara Falls, Ontario L2J 4J7 (CA)

(74) Representative: Zacco Norway AS
P.O. Box 488 Skøyen
0213 Oslo (NO)

(54) **SOUND REDUCTION ENCLOSURE AND METHOD OF MAKING A SOUND REDUCTION ENCLOSURE**

(57)   A method of making a sound reduction enclosure (10) for encapsulating a sound source (13), the method including taking a composite comprising a fibrous porous layer (14) and a thin, air impermeable, barrier layer (16), heating the composite and compressing the hot composite generally perpendicular to the interface between the porous layer (14) and the barrier layer (16) to form a tuned porous layer (14) by reducing the thickness and increasing the stiffness of the porous layer (14) to levels pre-determined using an upper frequency of the sound normally emitted by the sound source, and shaping the hot composite to form an enclosure (10) which at least partially encloses an interior space (12) in which the sound source (13) may, in use, be positioned.

Figure 1a

EP 3 871 872 A1

**Description**

The present invention relates to a sound reduction enclosure and method of making a sound reduction enclosure, particularly, but not exclusively, for the encapsulation of automotive sound sources.

It is known to achieve noise attenuation in vehicles such as cars or trucks by using insulators, dampers and absorbers to reflect, absorb and dissipate sound, and thus reduce the noise levels in the interior of the vehicle.

For example, it is known to apply noise attenuating trim parts as cladding for parts such the inner dash or engine bay area, the doors, or as part of floor covering systems. Examples of such trim parts are disclosed in WO98/18656, WO2004/53833, WO2011/110588, WO2016/066565, WO2019/007660

These generally include a decoupling layer which is secured to a structural part of the vehicle, and a porous, fibrous layer, which is separated from the decoupling layer by a thin film or membrane. The decoupling layer is known to be made from a foamed material or from a porous, fibrous material. In some cases the intermediate film or membrane is air-impermeable, in others it is perforated or permeable.

WO2011/110588 discloses an automotive sound insulating trim material which comprises a mass layer and a decoupling layer. The mass layer includes a fibrous porous layer, and a thin, air impervious barrier layer. It is specified that, to achieve good insulation performance over all the frequency range of interest, this needs to have a dynamic Young's modulus E of at least 96AWt Pa, where AW is the area weight in g/m$^2$ and t is the thickness of the mass layer in mm. The barrier layer is disposed between the mass layer and the decoupling layer, and the three layers are laminated together. The decoupling layer acts as a spring layer and may be made from an open or closed thermoplastic or thermosetting foam, or from a natural or synthetic fibrous material.

WO2004/053833 discloses an ultralight noise reducing composite which comprises an acoustically transparent, lightweight film mounted between a foamed backing layer and an airflow resistance (AFR) layer consisting of a compressed fibre felt. The acoustic properties are tuned by balancing the absorption and sound transmission behaviour of the composite. This is achieved by varying the thickness of the AFR, the compression stiffness of the foamed backing layer and the thickness of, and degree of perforations in the film.

In all these prior art references, the material is designed to be used as a liner which is mounted, via the decoupling layer, flat against one side of a panel in the vehicle.

It is also known to surround a sound source with an enclosure made from an acoustic barrier material. Such acoustic enclosures need to be made from a barrier material which provides significant sound transmission loss performance. The ratio of the acoustic power incident on the enclosure from the noise source to the acoustic power transmitted through the enclosure to the receiver side of the enclosure is referred to as the transmission loss.

The transmission loss of a single layer impervious barrier can be predicted using the following "mass law" equation:

$$SRI = 20\log(Mf) - x \qquad \text{- equation 1}$$

where: SRI is the sound reduction index (in Decibels)

M is the mass of the barrier per unit area (in kg/m$^2$)

f is the frequency of the incident sound (in Hertz)

x is a constant which varies depending on the source reference, but is generally between 43 and 50.

This shows that, in general, the greater the mass of the barrier material, the greater the transmission loss. So, when used for sound insulation in a vehicle, the transmission loss has to be balanced with the importance of weight reduction in improving the fuel / energy efficiency of the vehicle.

Moreover, traditional barrier materials (such as injection moulded plastic) tend to be very reflective, and when the barrier material encloses the sound source, these reflections can increase the noise level inside the enclosure, and cause a build up in reverberant sound. To address this, it is known to apply a material with good sound absorption properties to the interior of the enclosure, as disclosed, for example, in "Noise and Vibration Control" by L.Beranek, 2nd Edition, John Wiley & Sons, 2006 (pages 547-548).

Sound absorption refers to the process of reduction or elimination of sound by allowing the material to receive an incoming sound wave, and to absorb the energy of the sound wave, so that the amplitude of the sound wave, and therefore the level of the sound, is reduced.

Where an enclosure acts as both a barrier for sound transmission and as a sound absorber, the degree to which sound from the sound source reaches a receiver at the exterior of the enclosure can be represented by the insertion loss (IL). The insertion loss (in Decibels) can be predicted using the following equation:

$$IL \cong SRI + 10 \, log \frac{A}{S_w}$$

- equation 2

where: SRI is the sound reduction index or transmission loss of the walls (in Decibels)

A is the total absorption in the interior of the enclosure (in Sabin)

$S_w$ is the surface area of the walls (m$^2$)

US2014/0008145 discloses a composite material which is alleged to provide both good sound absorption and insulation. It is formed from at least one non-woven fibre layer and at least one air-impermeable polyethylene film layer. The non-woven fibre layer is a stacked fibre layer and has a thickness of at least 1mm, and the polyethylene film a thickness of from 0.0009mm to 0.1mm. The composite is designed to be arranged such that the film layer lies between the sound source and the non-woven fibre layer. Further embodiments are described in which the non-woven layer is sandwiched between two polyethylene films, in order to provide good sound insulation and absorption from is provided for sound on either side of the composite. A stack of two or more sheets of this composite is also disclosed.

It is stated in this document that, theoretically, a sound absorbing material can achieve complete sound absorption only if the thickness of the material is equal or greater than one-quarter of the wavelength of the incident sound wave. This means that a sound absorber of a given thickness will cease to be an effective absorber of sound waves with a wavelength above a certain level, i.e. lower frequency sounds. It is therefore specified that the thickness of the composite material is increased to ensure that it provides good absorption of low frequency sounds.

It is an object of the invention to provide a material which can be used to form a self-supporting enclosure to encapsulate a sound source, which is lightweight, which acts as both a barrier for sound transmission and which has good sound absorption properties. The material may, for example, be used in relation to automotive sound sources such as component motors, pumps, fans, valves and batteries.

According to a first aspect the invention we provide a method of making a sound reduction enclosure for encapsulating a sound source, the method including taking a composite comprising a porous layer and a thin, air impermeable, barrier layer, heating the composite and compressing the hot composite generally perpendicular to the interface between the porous layer and the barrier layer to form a tuned porous layer by reducing the thickness and increasing the stiffness of the porous layer to levels pre-determined using an upper frequency of the sound normally emitted by the sound source, and shaping the hot composite to form an enclosure which at least partially encloses an interior space in which the sound source may, in use, be positioned.

The thickness of the barrier layer is advantageously substantially less than the thickness of the porous layer.

Advantageously, the porous layer is made from a fibrous material.

The compression of the hot composite may take place before, during or after the shaping of the hot composite to form the enclosure.

The composite may be arranged so that one of the tuned porous layer or the barrier layer forms an exterior surface of the enclosure and the other of the tuned layer or barrier layer forms an interior surface of the enclosure.

The composite may be arranged during the shaping process such that the tuned porous layer lies between the interior space of the enclosure and the barrier layer.

The enclosure may comprise a further porous layer which arranged so that the barrier layer is sandwiched between the tuned porous layer and the further porous layer.

In this case, the further porous layer may be placed against the barrier layer after heating of the composite but before the compression and shaping of the composite.

Where a further porous layer is provided the composite may be arranged during the shaping process such that the further porous layer lies between the interior space of the enclosure and the barrier layer, i.e. so that the further porous layer lines the interior of the enclosure.

The tuned porous layer may be a non woven, fibrous material. In this case, at least some of the fibres may be made from a thermoplastic polymer. The further porous layer may also be a non woven, fibrous material. In this case, at least some of the fibres of the further non porous layer may be made from a thermoplastic polymer.

The tuned porous layer may be made from a mixture of higher melting temperature polymer fibres and binder fibres with a low melting temperature outer sheath and a higher melting temperature inner core. In this case, advantageously, the barrier layer is made from a polymeric material with a higher melting temperature than the melting temperature of the outer sheath of the binder fibres.

Where provided, the further porous layer may be made from a mixture of higher melting temperature polymer fibres and binder fibres with a low melting temperature outer sheath and a higher melting temperature inner core.

In one embodiment, either one or both of the tuned porous layer or further porous layer, where provided, is made from needled polyester with polyester binder fibres.

In one embodiment, the barrier layer is made from thermoformable polyurethane.

The enclosure may be shaped to completely or almost completely surround the sound source.

The composite may be compressed such that the tuned porous layer is sufficiently stiff to retain the shape of the enclosure without any external or additional mechanical support.

Where a further porous layer is provided the further porous layer may be stiffened sufficiently to retain the shape of the enclosure without any external or additional mechanical support.

According to a second aspect of the invention we provide a self-supporting sound reduction enclosure for encapsulating a sound source, the sound reduction enclosure being made from a composite shaped to form an enclosure which at least partially encloses an interior space in which the sound source may, in use, be positioned, the composite comprising a compressed porous layer and a thin, air impermeable, barrier layer, wherein the thickness and the stiffness of the porous layer are such that the resonant frequency of the porous layer is greater than an upper frequency of the sound normally emitted by the sound source..

The resonant frequency of the enclosure ($f_r$) may be related to the dynamic Young's modulus (E) of the composite, the mass per unit area of the enclosure in kg/m$^2$ (M), and the thickness of the composite in m (L) by the equation

$$f_r = 0.25 \sqrt{\frac{E}{ML}}.$$

The porous layer may have been stiffened by compressing the composite when hot in a direction generally perpendicular to the interface between the barrier layer and the tuned porous layer.

The composite may be arranged so that one of the tuned porous layer or the barrier layer forms an exterior surface of the enclosure and the other of the tuned layer or barrier layer forms an interior surface of the enclosure.

The composite may be arranged such that the porous layer lies between the interior space of the enclosure and the barrier layer.

The enclosure may comprise a further porous layer which is arranged so that the barrier layer is sandwiched between the two porous layers.

Where a further porous layer is provided the composite may be arranged such that the further porous layer lies between the interior space of the enclosure and the barrier layer.

The tuned porous layer may be a non woven, fibrous material. In this case, at least some of the fibres may be made from a thermoplastic polymer. The further porous layer may also be a non woven, fibrous material made. In this case, at least some of the fibres of the further non porous layer may be made from a thermoplastic polymer.

The tuned porous layer may be made from a mixture of higher melting temperature polymer fibres and binder fibres with a low melting temperature outer sheath and a higher melting temperature inner core. In this case, advantageously, the barrier layer is made from a polymeric material with a higher melting temperature than the melting temperature of the outer sheath of the binder fibres.

Where provided, the further porous layer may be made from a mixture of higher melting temperature polymer fibres and binder fibres with a low melting temperature outer sheath and a higher melting temperature inner core.

In one embodiment, either one or both of the tuned porous layer or further porous layer, where provided, is made from needled polyester with polyester binder fibres.

In one embodiment, the barrier layer is made from thermoformable polyurethane.

The tuned porous layer is sufficiently stiff to retain the shape of the enclosure without any external or additional mechanical support.

Where a further porous layer is provided, the further porous layer may be sufficiently stiff to retain the shape of the enclosure without any external or additional mechanical support.

The enclosure may be made using the method of the first aspect of the invention.

Embodiments of the invention will now be described, by way of example only, with reference to the following drawings of which :

FIGURES 1a and 1b are a schematic illustrations of a transverse cross-section through two different embodiments of self-supporting sound reduction enclosure according to the second aspect of the invention,

FIGURE 2 is a schematic illustration of a transverse cross-section through the composite used to form the sound reduction enclosure illustrated in Figure 1,

FIGURE 3 is a schematic illustration of a transverse cross-section through an alternative embodiment of composite suitable for use in the sound reduction enclosure illustrated in Figure 1,

FIGURE 4 is a graph of density versus Young's modulus for 1000g/m$^2$ PET, and

FIGURE 5 is a schematic illustration of a transverse cross-section through a self-supporting sound reduction enclosure according to the second aspect of the invention made using the composite material illustrated in Figure 3.

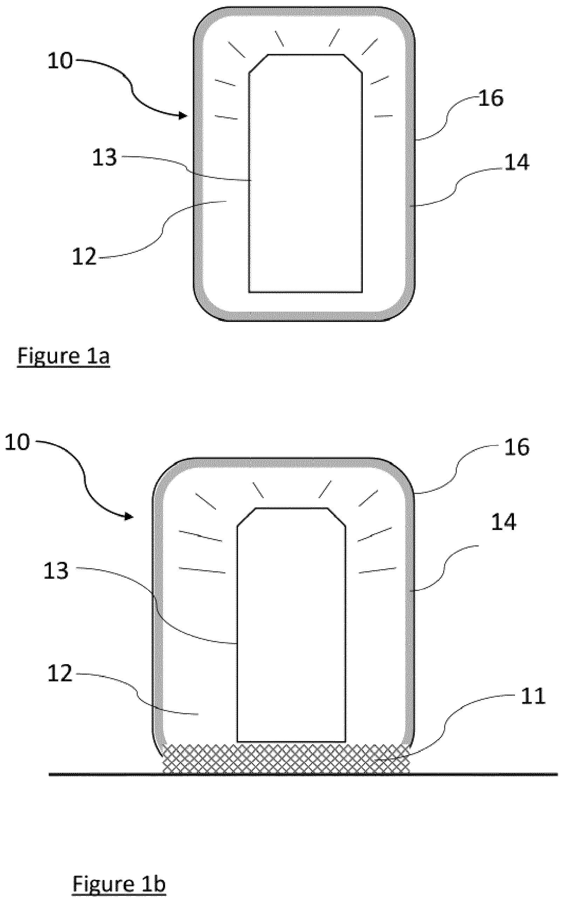

Referring now to Figures 1a and 1b, there is shown sound reduction enclosure 10 suitable for use in encapsulating a sound source. It may, for example, be used in surrounding automotive sound sources such as component motors, pumps, valves, and batteries. The enclosure 10 at least partially encloses an interior space 12 in which the sound source 13, is, in use, positioned. The enclosure 10 is shaped to cover at least 50% of the volume around the sound source 13. Advantageously, however, the enclosure 10 is shaped to completely or almost completely surround the sound source 13.

The composite is arranged so that one of the tuned porous layer 14 or the barrier layer 16 forms an exterior surface of the enclosure 10 and the other of the porous layer 12 or barrier layer 16 forms an interior surface of the enclosure 10.

The enclosure 10 is self-supporting, by which we mean that it is sufficiently stiff to retain its shape without external support mechanical support.

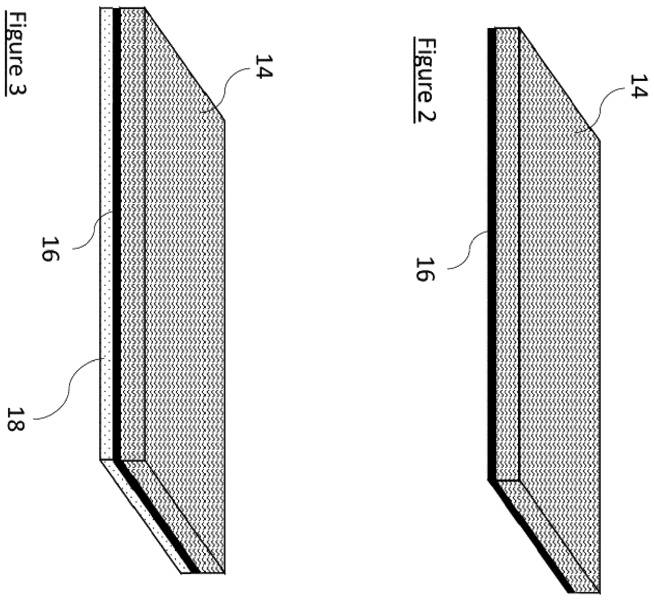

Instead of using a single layer, impermeable barrier material, the enclosure is formed from a composite, as illustrated in Figure 2, which comprises a porous layer 14, and a thin air impermeable barrier layer 16. Advantageously, the enclosure 10 is formed from a single sheet of composite.

The barrier layer 16 is bonded to the porous layer 14. This may be achieved using an adhesive, or the barrier layer 16 may simply become welded to the porous layer 14 during the heating and compression of the composite described below. The porous layer 14 is sufficiently stiff to provide the enclosure with the mechanical integrity to be self-supporting, so no auxiliary support or framework is required for the enclosure to maintain its shape. The only contact between the enclosure and the rest of the structure of the vehicle is that which is required to support the enclosure in its position relative to the sound source. Where the sound source 13 is mounted on another part of the vehicle, the enclosure 10 and at least a portion of that other part of the vehicle may together completely surround the sound source 13.

Where the enclosure 10 does not completely or almost completely surround the sound source 13, an additional absorber 11 may be provided to completely or almost completely encapsulate the sound source 13. In this case, the additional absorber 11 is preferably provided adjacent to the sound source 13. This is illustrated in Figure 1b.

Whilst in the embodiment illustrated in Figures 1a and 1b, the sound source 13 is located completely within the interior space 12 of the enclosure 10, this need not be the case. Part of the sound source 13 might be located within the interior space 12, and part located outside the interior space 12 of the enclosure 10.

It has been found that, despite being almost entirely porous, a composite formed from a porous stiff felt or foam bonded to an impermeable barrier acts as a single layer of impermeable layer of equivalent mass, in terms of its transmission loss, if the frequency of the incident sound is below a threshold level - known as the quarter wavelength resonant frequency. It has also been suggested that this threshold frequency $f_r$ is related to the dynamic Young's modulus (E) of the composite, the mass per unit area of the enclosure in kg/m$^2$ (M), and the thickness of the composite in m (L) by the following equation:

$$f_r = 0.25\sqrt{\frac{E}{ML}}$$    - equation 3

If the incident sound has a frequency which is higher than this threshold frequency, the two component layers of the composite act as two separate layers. When acting on its own, the porosity of the porous layer 14 means that it does not act as an effective sound barrier. Moreover, as the impermeable barrier layer is very thin, it is also very light, and following the mass law equation (equation 1 above), this means that the transmission loss it provides is very low.

Thus, to achieve the best possible sound insulation, the porous layer 14 is tuned so that the quarter wavelength resonant frequency $f_r$ of the porous layer 14 is greater than the frequency of sound generally emitted or likely to be emitted by the sound source, or at least greater than the frequency of the majority of the sound normally emitted by the sound source. So, for example, if the sound source normally emits sound with frequencies of between 500 - 1000 Hz, the porous layer 14 is tuned so that its quarter wavelength resonant frequency is just greater than 1000 Hz.

This achieved by heating the composite, and compressing it in a direction perpendicular to the interface between the porous layer 14 and the barrier layer 16, whilst also moulding it into the desired shape to form the enclosure. The Young's modulus E of the composite increases the more it is compressed, whilst its thickness L decreases. The relationship between the Young's modulus E and the compressed thickness of a given weight (mass per unit area) of porous fibrous material can be determined experimentally, and this information used to determine the target thickness of the porous layer 14, prior to commencing the moulding process.

It will be appreciated that for a given mass of composite, the composite can be compressed to the extent required for the Young's modulus to be high enough and the thickness low enough, not only so that the porous layer 14 has the required mechanical integrity to provide a self-supporting enclosure 10, but also so that the quarter wavelength resonant frequency $f_r$ of the porous layer14 is higher than the frequency of the sound from the sound source. The enclosure 10 should then provide the same or substantially the same transmission loss as an enclosure of the same mass made from an impermeable single layer barrier material. Owing to the presence of the tuned porous layer 14, the enclosure 10 may also provide improved sound absorption, and therefore increased insertion loss (as per equation 2 above), compared to the single impervious barrier layer equivalent where there is negligible sound absorption.

The transmission loss provided by the enclosure 10 does not depend on whether or not the porous layer 14 or the barrier layer 16 is closest to the sound source 13 - the composite will still act as a single layer providing the frequency of the sound is below the quarter wavelength resonant frequency. Preferably, the composite is arranged relative to the enclosure 10 such that the porous layer 14 is between the barrier layer 16 and the interior space 12 of the enclosure 10, as illustrated in Figure 1. In other words, the sound absorbing layer is directly adjacent the interior space 12, and sound emanating from the sound source 13 must penetrate the porous layer 14 before it can reach the barrier layer 16. If this is the case, because the interior surface of the enclosure 10 is porous, it may reduce the problem of reflection of sound waves around the interior 12 of the enclosure, and the associated build up of reverberant sound.

The porous layer 14 could be made from a stiff foam, but is advantageously made from a fibrous material. Such a material is advantageously non-woven fibrous material. The fibres could be natural or synthetic, and could be mineral fibres or made from a polymer. In one embodiment, the porous layer 14 is made from polymer fibres, including some binder fibres which have an outer sheath with a lower melting temperature than both the other fibres, and the core of the binder fibres. It will be appreciated, however, that the porous layer 14 could equally be made from a mixture of mineral fibres or non-polymeric natural fibres, and polymeric binder fibres. Moreover, if the enclosure is to be used in high temperature application, in which softening of thermoplastic fibres could compromise the mechanical and acoustic properties of the enclosure 10, the porous layer 14 could be formed from natural or mineral fibres with binder fibres being made from glass or ceramic fibres coated in or impregnated with a thermosetting polymer or resin.

In one example, the porous layer 14 is made from needled polyester (PET), with polymeric binder fibres which have a polyester core and a low melt polyester outer sheath. Up to around 50% of the fibres may be binder fibres.

During the moulding process, the composite is heated to a sufficiently high temperature to melt the outer sheath of the binder fibres so that the binder fibres stick together, and keep the porous layer 14 in its stiff, reduced thickness, state when the enclosure 10 is cooled, the compressive force released, and the enclosure removed from the mould.

The barrier layer 16 is made from an air impermeable polymer sheet or film, which has a higher melting temperature than the melting temperature of the outer sheath of the binder fibres in the porous layer. In one embodiment, the barrier layer 16 was made from thermoformable polyurethane (PU) with a melting point of 120°C and elongation to break of 650%. The thickness of the barrier layer 16 is not critical, and may be from $10\mu m$ to $2000\mu m$. The thickness of the barrier layer 16 may advantageously from $100\mu m$ to $150\mu m$.

A composite with a resonant frequency of greater than 1000 Hz has been achieved using the materials mentioned above, with the porous layer 14 having a mass per unit area of 800-2000 $g/m^2$, and the barrier layer being around 100 - 150$\mu m$ thick. The composite is heated to around 110°C, and compressed until the thickness of the porous layer 14 was 2 -13 mm.

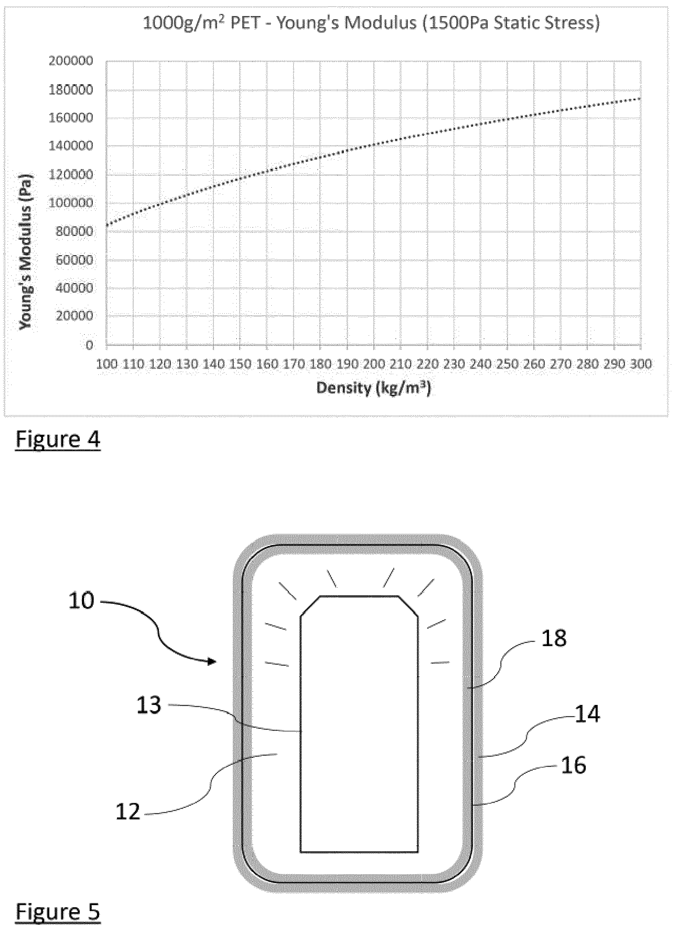

The relationship between the density and Young's modulus (at 1500Pa static stress) for 1000$g/m^2$ PET is illustrated in Figure 4. The density of the material can be related to the thickness of the layer (in m) by dividing the weight of the material (in $kg/m^2$) by the density (in $kg/m^3$). In this example, the thickness of 1000$g/m^2$ PET to achieve a given Young's modulus can be determined by inverting the density. So, for example, to achieve a Young's modulus of 100 kPa, the density of the material must be 120 $kg/m^3$, and the thickness of the 10000$g/m^2$ PET to achieve this density is 9.1mm. Similarly, the density at Young's modulus of 160 kPa is 250 $kg/m^3$, and the thickness 4mm. For the latter example, a quarter wavelength frequency of around 1500 Hz was achieved using 1000$g/m^2$ PET, with a thickness of around 4mm, and Young's modulus of 160 kPa.

If the proposed use of the enclosure is such that the maximum frequency of the sound emitted by the sound source 13 is particularly high, once tuned, the porous layer 14 may be so thin and dense that it does not provide particularly effective sound absorption. In this case, a porous sound absorption layer 18 may be added to the composite so that the barrier layer 16 is sandwiched between the tuned porous layer 14 and the sound absorption layer 18, as illustrated in Figure 3.

In one embodiment, the sound absorption layer 18 is a limp non-woven material, made from polyester for example, and therefore does not contribute in any significant way to the stiffness of the enclosure 10 and hence its ability to self-support, or to its transmission loss.

In prior art systems in which an absorption layer is mounted on the interior of the enclosure, this is done in a second production process after a polymer is injection moulded to form the outer barrier layer of the enclosure. In contrast, with the inventive method, the three layer enclosure can be manufactured in a simplified process, for example by heating the porous layer 14 and barrier layer 12 in an oven, removing the hot two-layer composite from the oven, positioning the absorption layer 18 against barrier layer 12, and then compressing the resulting three layer composite into a mould cavity, until the porous layer 14 is compressed to the correct degree, allowing the composite to cool before removing from the mould. As the sound absorption layer 18 is cold when it is compressed, it will substantially, or at least partly, recover its original thickness after the enclosure is removed from the mould.

The sound absorption layer 18 may, however, be stiffened, for example, in the same way as the tuned porous layer 14, and in this case, the three layer composite would be heated before being compressed into the mould. In this case, the tuned porous layer 13 and the sound absorption layer 18 may together provide the enclosure 10 with the required stiffness to be self-supporting.

If reducing the sound of the enclosed sound source 13 is the priority, in this case, the composite is advantageously arranged so that the sound absorption layer 18 lines the interior of the enclosure 10, whilst the tuned porous layer 14 is on the outside, as illustrated in Figure 5. However, in other applications, absorption of sound from sound sources external to the enclosure 10 may also be desirable, and in this case, the tuned porous layer 14 may line the interior of the enclosure 10 whilst the sound absorption layer 18 is on the outside.

The outer surface of one or both of the porous layers 14, 18, i.e. the surface opposite to the barrier layer 16, may be provided with a covering such as a non-woven scrim material, a perforated foil or film, or a woven fabric. This may further improve the sound absorption and / or improve the water resistance of the enclosure.

**Claims**

1. A method of making a sound reduction enclosure (10) for encapsulating a sound source (13), the method including taking a composite comprising a porous layer (14) and an air impermeable, barrier layer (16), heating the composite and compressing the hot composite generally perpendicular to the interface between the porous layer (14) and the barrier layer (16) to form a tuned porous layer by reducing the thickness and increasing the stiffness of the porous layer (14) to levels pre-determined using an upper frequency of the sound normally emitted by the sound source (13), and shaping the hot composite to form an enclosure which at least partially encloses an interior space (12) in which the sound source (13) may, in use, be positioned.

2. A method according to claim 1 wherein the compression of the hot composite takes place before, during or after the shaping of the hot composite to form the enclosure (10).

3. A method according to claim 1 or 2 wherein the composite is arranged so that one of the tuned porous layer (14) or the barrier layer (16) forms an exterior surface of the enclosure and the other of the tuned porous layer (14) or barrier layer (16) forms an interior surface of the enclosure.

4. A method according to claim 3 wherein the composite is arranged during the shaping process such that the tuned porous layer (14) lies between the interior space (12) of the enclosure and the barrier layer (16).

5. A method according to any preceding claim wherein the enclosure comprises a further porous layer (18) which arranged so that the barrier layer (16) is sandwiched between the tuned porous layer (14) and the further porous layer (18).

6. A method according to claim 5 wherein the further porous layer (18) is placed against the barrier layer (16) after heating of the composite but before the compression and shaping of the composite.

7. A method according to claim 5 or 6 wherein the composite is arranged during the shaping process such that the further porous layer (18) lies between the interior space (12) of the enclosure (10) and the barrier layer (16).

8. A self-supporting sound reduction enclosure (10) for encapsulating a sound source (13), the sound reduction enclosure (10) being made from a composite shaped to form an enclosure which at least partially encloses an interior space (12) in which the sound source (13) may, in use, be positioned, the composite comprising a compressed porous layer (14) and an air impermeable barrier layer (16), wherein the thickness and the stiffness of the porous layer (14) are such that the resonant frequency of the porous layer (14) is greater than an upper frequency of the sound normally emitted by the sound source (13).

9. A sound reduction enclosure (10) according to claim 8 wherein the resonant frequency of the enclosure ($f_r$) is related to the dynamic Young's modulus (E) of the composite, the total mass of the enclosure in kg (M), and the thickness of the composite (L) by the equation $f_r = 0.25\sqrt{\dfrac{E}{ML}}$.

10. A sound reduction enclosure (10) according to claim 8 or 9 wherein the porous layer (14) has been stiffened by compressing the composite when hot in a direction generally perpendicular to the interface between the barrier layer (16) and the porous layer (14).

11. A sound reduction enclosure (10) according to any one of claims 8 to 10 wherein the composite is arranged so that one of the porous layer (14) or the barrier layer (16) forms an exterior surface of the enclosure (10) and the other of the porous layer (14) or barrier layer (16) forms an interior surface of the enclosure (10).

12. A sound reduction enclosure (10) according to claim 11 wherein the composite is arranged such that the porous layer (14) lies between the interior space (12) of the enclosure (10) and the barrier layer (16).

13. A sound reduction enclosure (10) according to any one of claims 8 to 12 comprising a further porous layer (18) which arranged so that the barrier layer (16) is sandwiched between the two porous layers (14, 18).

14. A sound reduction enclosure (10) according to claim 13 wherein the composite is arranged such that the further porous layer (18) lies between the interior space (12) of the enclosure (10) and the barrier layer (16).

15. A sound reduction enclosure (10) according any one of claims 8 to 14 wherein the porous layer (14) is made from a mixture of higher melting temperature polymer fibres and binder fibres with a low melting temperature outer sheath and a higher melting temperature inner core.

Figure 1a

Figure 1b

14

16

<u>Figure 2</u>

14

16

18

<u>Figure 3</u>

**1000g/m² PET - Young's Modulus (1500Pa Static Stress)**

## Figure 4

## Figure 5

Europäisches
Patentamt

European
Patent Office

Office européen
des brevets

## EUROPEAN SEARCH REPORT

Application Number

EP 21 15 9629

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/159646 A1 (NICHIAS CORP [JP]) 21 September 2017 (2017-09-21) * claims 1-8; figures 1,2; example 1 * | 1-15 | INV. B32B1/02 B32B5/02 B32B5/18 |
| X | EP 2 684 187 A1 (AUTONEUM MAN AG [CH]) 15 January 2014 (2014-01-15) * paragraphs [0007], [0118], [0119]; claims 1-10; figures 1-8 * | 1-15 | B32B7/12 B32B27/06 B32B27/12 B32B27/40 |

TECHNICAL FIELDS
SEARCHED     (IPC)

B32B

The present search report has been drawn up for all claims

| Place of search | Date of completion of the search | Examiner |
|---|---|---|
| The Hague | 18 June 2021 | Chatron-Michaud, P |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 15 9629

This annex lists the patent family members relating to the patent documents cited in  the above-mentioned European search report.
The members are as contained in the European Patent Office EDP file on
The European Patent Office is in no way liable for these particulars which are merely given for the purpose of information.

18-06-2021

| Patent document cited in search report | | | Publication date | Patent family member(s) | | | Publication date |
|---|---|---|---|---|---|---|---|
| WO 2017159646 | A1 | | 21-09-2017 | JP | 6283044 | B2 | 21-02-2018 |
| | | | | JP | 2017167251 | A | 21-09-2017 |
| | | | | WO | 2017159646 | A1 | 21-09-2017 |
| EP 2684187 | A1 | | 15-01-2014 | AR | 085635 | A1 | 16-10-2013 |
| | | | | BR | 112013019385 | A2 | 27-10-2020 |
| | | | | CA | 2825378 | A1 | 13-09-2012 |
| | | | | CN | 103534750 | A | 22-01-2014 |
| | | | | EP | 2684187 | A1 | 15-01-2014 |
| | | | | ES | 2543402 | T3 | 19-08-2015 |
| | | | | JP | 5791738 | B2 | 07-10-2015 |
| | | | | JP | 2014515118 | A | 26-06-2014 |
| | | | | KR | 20140002734 | A | 08-01-2014 |
| | | | | MY | 161803 | A | 15-05-2017 |
| | | | | PL | 2684187 | T3 | 30-10-2015 |
| | | | | RU | 2013145078 | A | 20-04-2015 |
| | | | | US | 2014014438 | A1 | 16-01-2014 |
| | | | | WO | 2012119654 | A1 | 13-09-2012 |
| | | | | ZA | 201306112 | B | 30-04-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9818656 A
- WO 200453833 A
- WO 2011110588 A
- WO 2016066565 A
- WO 2019007660 A
- WO 2004053833 A
- US 20140008145 A

**Non-patent literature cited in the description**

- **L.BERANEK.** Noise and Vibration Control. John Wiley & Sons, 2006, 547-548